# DEMANDE DE BREVET EUROPEEN

(11) **EP 4 736 984 A1**
(43) Date de publication de la demande: **06.05.2026**
(21) Numéro de dépôt: 25207629.4
(22) Date de dépôt: 09.10.2025
(51) Int. Cl.: B01D 27/00, B01D 27/14, B01D 46/00, B01D 46/24, B01D 46/64

(54) **CARTOUCHE DE FILTRATION AVEC DEUX ETAGES POUR LA SEPARATION D'UN FLUIDE, PROCEDE D'ASSEMBLAGE ET UTILISATION DE LA CARTOUCHE**

(30) Priorité: 31.10.2024 FR 2411957
(71) Demandeur: Purflux Filtration, 78280 Guyancourt (FR)
(72) Inventeur: HIRARD, Sylvain, 14250 Tilly sur Seulles (FR)
(74) Mandataire: Plasseraud IP

(57) **Abrégé**

Pour simplifier l'assemblage d'une cartouche (1) filtrante qui renferme l'élément filtrant (EF) dans un boîtier (2) serti ayant une face de fixation mécanique et connexion fluidique, tout en intégrant deux moyens de filtration séparés, l'ossature de l'élément résulte de l'interconnexion de deux pièces (11, 12) servant chacune à porter au moins un enroulement de média filtrant (M1, M1', M2), en intégrant dans la première pièce un premier tube (7) ajouré et un flasque fermé (5a) qui vient s'insérer au fond d'une chambre de filtration délimitée par le boîtier (2), tandis que la deuxième pièce inclut un flasque ouvert avec un deuxième tube (8) , central et délimitant un creux central (6) de l'élément (EF) qui communique avec la sortie de la cartouche via l'ouverture du flasque (5b) qui est engagé contre un élément de couvercle (20) formant tout ou partie de la face de fixation et connexion fluidique.

## Description

### Domaine technique

L'invention concerne les équipements pour circuit de fluide qui permettent de séparer un liquide ou fluide particulier d'un flux principal tel qu'un flux gazeux (air notamment). Il est proposé une cartouche de filtration d'air avec deux étages pour la séparation d'huile ou fluide transporté dans le flux, un procédé d'assemblage de la cartouche et une utilisation de cette dernière.

### Arrière-plan technologique

Une opération de filtration peut être prévue de façon compacte par utilisation d'une cartouche, avec l'avantage de pouvoir remplacer ce composant. Une épuration, avec plusieurs médias pour améliorer la séparation, est souvent permise par une telle cartouche pour un flux de fluide, typiquement gazeux comme dans le cas de l'air de circuits se chargeant en huile : on retrouve ce type de configuration dans les systèmes de freinage pneumatique ou de fourniture d'air comprimé par exemple.
Pour permettre une circulation d'air épuré dans les circuits fournissant un débit d'air dans des zones d'intérêt, par exemple pour permettre une friction lord d'un freinage, il est connu d'utiliser des éléments de séparation pour déshuiler l'air des compresseurs, en particulier des compresseurs à vis lubrifiés et refroidis à l'huile. Dans les compresseurs à vis, il est courant que l'air entre en contact avec l'huile. L'huile est utilisée pour l'étanchéité, le refroidissement et la lubrification de la vis du compresseur. Une séparation est réalisée dans la chambre de filtration d'un boîtier de déshuilage, ce boîtier se montant sur un support qui inclut une canalisation recevant l'huile séparée (pour sa recirculation dans le circuit d'huile). Les filtres ayant ce format de boîtier pour le déshuilage de l'air peuvent constituer une cartouche de filtration à visser (couramment appelée cartouche « spin-on »).

Un dispositif de déshuilage peut inclure plusieurs étages de séparation. Le document US 8080080B2 (ou son équivalent EP 1 844 840) décrit ainsi un séparateur muni d'un pré-séparateur, d'un élément annulaire de filtration à effet coalesceur d'huile et d'un post-séparateur, formés comme des modules.
La conception et le montage de l'élément filtrant, qui doit être logé dans un boîtier de cartouche, pose des difficultés lorsque plusieurs éléments de filtration doivent être prévus. Des cartouches de filtration qui présentent deux étages de filtration ont été proposées avec une disposition concentrique, par exemple dans les documents US 9 248 393 B2, US 4 878 929 A ou EP 3 930 872 B1.

Pour éviter ces problèmes, certains moyens filtrants à niveau élevé de séparation évoluent vers un gain d'efficacité avec l'inconvénient d'une plus grande complexité (avec un prix de revient augmenté) et/ou d'une perte de charge plus élevée. Ceci n'est pas souhaitable, d'autant plus que la cartouche est généralement une partie qui se jette au bout d'un certain temps d'utilisation, grâce à une fixation amovible permettant de réutiliser la tête de connexion.

Plus largement, il existe donc un besoin pour des cartouches moins contraignantes pour l'assemblage des parties de séparation, tout en garantissant un haut niveau d'efficacité et une robustesse du montage.

### Résumé

Afin d'améliorer la situation, il est proposé une cartouche amovible de filtration à raccord de fixation en rotation pour se monter sur un support suivant un axe de montage rotatif, la cartouche permettant de séparer une partie fluide ou de l'huile d'un flux admis et comportant :
- un élément filtrant ayant un axe central et pourvu d'une ossature (structurelle) incluant un premier flasque fermé et un deuxième flasque avec une ouverture centrale qui définissent des extrémités axiales opposées de l'élément filtrant ;
- une première pièce ou élément structurel, appartenant à l'ossature, incluant le premier flasque et un premier tube ajouré qui s'étend longitudinalement depuis le premier flasque, autour de l'axe central jusqu'à une extrémité annulaire reliée rigidement au deuxième flasque ;
- un boîtier externe délimitant un volume intérieur contenant l'élément filtrant qui sépare ledit volume intérieur en une zone amont et une zone aval ;
- un élément de couvercle, appartenant au boîtier, qui inclut le raccord de fixation et délimite au moins un passage d'entrée communiquant avec la zone amont où circule le flux admis et un passage de sortie d'un flux épuré communiquant avec la zone aval, le passage de sortie formé dans le raccord de fixation étant traversé par l'axe central ;
- un premier étage de filtration et un deuxième étage de filtration qui est radialement espacé du premier étage de filtration pour être plus proche d'un espace intérieur creux de la zone d'aval ;
   avec la particularité que :
- l'espace intérieur creux est délimité par un deuxième tube ajouré, dit tube central, qui est conçu et formé avec le deuxième flasque dans une deuxième pièce de l'ossature, qui est distincte de la première pièce ;
   et l'ossature est réalisée en seulement ces pièces (ce qui peut permettre de réduire l'ossature à deux pièces) formées chacune en matériau en plastique, avec le premier tube qui :
- permet l'insertion, dans la première pièce ou élément structurel, du tube central via l'extrémité annulaire du premier tube ;
- s'étend autour du tube central supportant le deuxième étage de filtration ; et
- supporte le premier étage de filtration.

Le premier tube peut, de préférence, entièrement envelopper le deuxième tube (central) avec le premier étage de filtration (qui peut être un quelconque moyen de filtration, par exemple avec au moins un média filtrant enroulé ou plusieurs médias combinés). On comprend que le premier tube permet de disposer le premier étage de filtration le long d'un espace périphérique du volume intérieur qui fait partie de la zone amont, ce qui permet typiquement de délimiter, avec le boîtier, cet espace périphérique (annulaire) de la zone amont. Il est ainsi défini une face d'entrée/d'accès par laquelle le flux admis (flux d'air à filtrer ou autre fluide) arrivant par la base ou élément de couvercle de la cartouche puis circulant autour de l'élément filtrant peut passer suivant une direction centripète (sens de filtration centripète).

Avec ces dispositions, il est permis de simplifier l'assemblage de l'élément filtrant et de la cartouche. Le deuxième flasque peut inclure une projection axiale annulaire saillante à l'opposé du deuxième tube, depuis l'ouverture centrale (formée dans une partie radiale du flasque), pour former un conduit axial de sortie. Le flasque pourvu de l'ouverture (ouverture centrale) est engagé, typiquement par ce type de projection, contre l'élément de couvercle qui forme tout ou partie de la face de fixation et connexion fluidique de la cartouche. Avantageusement, la deuxième pièce combine plusieurs fonctions :
- en supportant le deuxième étage de filtration (par le côté aval suivant le sens de filtration) sur une face intérieure/tournée vers l'axe central d'un média de ce deuxième étage ;
- en formant un guide rigide de délimitation de l'espace intérieur creux, compatible avec un guidage d'un raccord mâle de fixation ou insert similaire pour réaliser la fixation en rotation (vissage ou connexion baïonnette par exemple) ;
- en supportant aussi axialement les étages, par une face de flasque interne commune couplée/reliée aux extrémités correspondantes des deux étages de filtration avec la possibilité d'écarter radialement les médias/moyens de filtration de ces deux étages avec un effet de cloisonnement radialement intermédiaire entre l'espace périphérique de la zone d'amont et le tube central; et
- en définissant un siège de fixation/appui pour prévenir l'enfoncement de/bloquer axialement l'élément de couvercle lors de la fermeture du boîtier, possiblement par sertissage.
   La cartouche peut présenter une interface simple pour la connexion mécanique et fluidique à une base de support sous forme de tête de connexion intégrant plusieurs canaux d'écoulement.

En pratique, l'élément de couvercle peut former tout ou partie de la face (côté base) de fixation et connexion fluidique qui permet le montage fixe du boîtier avec un verrouillage en rotation sur un raccord de connexion, tel qu'un embout mâle filetée ou à ergots/reliefs de baïonnette par exemple. La cartouche peut être du type à boîtier serti, qui est entièrement métallique ou métallique au moins dans l'élément de couvercle et la partie de fixation par sertissage.
On comprend que les étages de filtration peuvent être conçus comme des rouleaux ou un enroulement avec un ou plusieurs médias à section transversale annulaire autour de l'axe central, tandis que l'élément de couvercle s'étend perpendiculairement à l'axe central. L'ossature de l'élément filtrant résulte de l'interconnexion de seulement deux pièces servant chacune à porter au moins un enroulement de média filtrant.

La cartouche peut être adaptée pour une séparation huile-gaz. Plus largement, la zone d'amont peut être une zone de circulation d'un flux chargé en un produit à séparer, par exemple un flux gazeux chargé en huile/lubrifiant qui constitue le flux admis. La cartouche permet de séparer l'huile du flux gazeux grâce au premier étage de filtration et au deuxième étage de filtration, de préférence en réalisant une coalescence avec la formation/récupération de gouttelettes d'huile dont tout ou partie est séparée du flux gazeux dans l'espace intérieur creux.

Dans des réalisations, le deuxième moyen ou étage de filtration inclut ou consiste en un média filtrant qui présente une finesse de filtration supérieure à chaque média filtrant du premier étage de filtration. Alternativement, le deuxième étage de filtration peut inclure ou consister en un média filtrant qui présente une finesse de filtration inférieure à au moins un média filtrant du premier étage de filtration.

Selon une particularité, la deuxième pièce est une pièce moulée, de préférence à partir d'un matériau thermoplastique, renforcé ou non. La deuxième pièce peut être dépourvue de métal. La deuxième pièce (deuxième flasque et tube central) est conçue indépendamment du reste de l'élément filtrant en une seule étape de moulage. La deuxième pièce, conçue séparément de la première pièce, peut présenter au moins des particularités suivantes :
- un bord annulaire constitué par une extrémité libre du tube central ;
- un épaississement permettant de réduire la section de passage, l'épaississement étant réalisé à distance de l'extrémité libre du tube central et/ou d'une extrémité annulaire opposée formée par la projection axiale formée sur le deuxième flasque.

Selon une particularité, la première pièce est une pièce moulée, de préférence à partir d'un matériau thermoplastique, renforcé ou non. Le premier tube peut être moulée avec une section circulaire constante et/ou en formant une face extérieure latérale cylindrique sans discontinuité de matière/composition entre ce premier tube et le premier flasque. La première pièce peut être dépourvue de métal. La première pièce (premier flasque et premier tube) est conçue indépendamment du reste de l'élément filtrant en une seule étape de moulage, avec ensuite éventuellement un traitement de surface

La première pièce, conçue séparément de la deuxième pièce, peut présenter au moins des particularités suivantes :
- un bord annulaire constitué par une extrémité libre du premier tube ;
- une épaisseur dépassant 1 ou 2 mm dans le premier tube, l'épaisseur du premier tube pouvant être constante.
   En complément ou indépendamment de ce qui précède, un diamètre extérieur du deuxième tube, sensiblement constant, peut représenter plus de la moitié du diamètre extérieur (sensiblement constant) du premier tube mais avec un ratio entre ces diamètres qui ne dépasse pas 7 :10 (le diamètre extérieur du tube central ou deuxième tube ne dépassant pas ainsi environ 70% du diamètre extérieur du premier tube). Avec cette disposition, le volume disponible entre les deux flasques peut avantageusement être optimisé dans son occupation par les moyens de filtrations (et ainsi cumuler des couches de média), sans recours à des moyens de filtration complexes et/ou en maintenant un écartement radial entre deux des moyens/étages de filtration, ce qui est avantageux pour éviter des effets de perte de charge.

Optionnellement, dans la première pièce, une partie radiale d'obturation prévue dans le premier flasque ferme, du côté d'un fond de la cartouche axialement opposé au conduit de sortie, l'espace intérieur creux. En complément ou alternativement, le bord annulaire peut être encliqueté sur le premier flasque et/ou noyé dans une couche de liaison avec le premier flasque, pour former une première jonction annulaire entre la première pièce et la deuxième pièce qui est une jonction :
- adjacente à la partie radiale d'obturation ; et
- adjacente et radialement plus intérieure qu'une zone annulaire de fixation axiale, contre le premier flasque, d'un média filtrant du deuxième étage de filtration.

Dans des modes de réalisation de la cartouche, une ou plusieurs des particularités suivantes peut-être peuvent être prévues :
- le premier tube forme avec le premier flasque, dans une vue en coupe longitudinale passant par l'axe central, une section en T.
- le premier tube est pourvu d'orifices (de passage radial) ayant au moins une portion de bord rectiligne,
- le premier tube présente pour chacun des orifices de passage radial deux bords parallèles, typiquement rectilignes.
- le deuxième tube est pourvu d'orifices (de passage radial) ayant au moins une portion de bord rectiligne,
- le deuxième tube présente pour chacun des orifices de passage radial deux bords parallèles, typiquement rectilignes.
- les orifices de passage radial pour l'un et/ou l'autre des tubes des deux pièces présentent un format rectangulaire ou carré.
- l'élément filtrant présente une symétrie de révolution.
- la cartouche est une cartouche sertie, en particulier avec un sertissage périphérique autour d'un couvercle qui inclut l'élément de couvercle.
- le couvercle peut inclure une partie de tôle de forme annulaire qui sert (en tant que partie/moyen de fixation) au sertissage et recouvre par l'extérieur l'élément de couvercle, par exemple en étant soudée sur l'élément de couvercle.

Dans certaines options, la cartouche présente un couvercle amovible permettant un remplacement sélectif de l'élément filtrant.

Dans des formes de réalisation de l'élément filtrant, on prévoit au moins une des dispositions suivantes :
- le premier étage de filtration inclut un premier média filtrant, de préférence agencé sous forme d'enroulement monocouche ou multicouches.
- le deuxième étage de filtration inclut un deuxième média filtrant, de préférence agencé sous forme d'enroulement monocouche ou multicouches.
- le premier média inclut des fibres de verre et/ou constitue un premier filtre/moyen de filtration coalesceur (coalesceur d'huile), de préférence en pouvant former la partie radialement la plus extérieure/face d'entrée du premier étage de filtration.
- un des médias est fibreux et/ou contient des fibres de verre, par exemple avec les fibres le constituant qui se tiennent entre elles, sans possibilité de relargage.
- dans le premier étage de filtration, il est prévu un média filtrant à effet coalesceur d'huile qui inclut plusieurs couches d'un même matériau filtrant (couches enroulées autour de l'axe central, sur l'extérieur et disposées éventuellement adjacentes ou contre le premier tube),
- dans un agencement multicouche à effet coalesceur d'huile du premier étage de filtration et/ou du deuxième étage de filtration, une couche individuelle du matériau filtrant a une perméabilité à l'air supérieure à 150 ou 180 L/m²s sans dépasser un seuil qui est par exemple d'environ 1400 ou 1 600 L/m²s (maximum). Cette perméabilité à l'air, qui peut être mesurée suivant un standard DIN 53'887, rend la cartouche particulièrement efficace pour le traitement d'un air comprimé chargé en huile.
- un matériau filtrant à coalescence constitutif de l'un au moins parmi le premier moyen/étage de filtration et le deuxième moyen/étage de filtration a une épaisseur de couche individuelle qui est submillimétrique.
- un matériau filtrant à coalescence constitutif de l'un au moins parmi le premier moyen/étage de filtration et le deuxième moyen/étage de filtration peut présenter optionnellement une densité qui est comprise entre 65 et 190 kg/m³, par exemple sans dépasser 70 kg/m³.
- le deuxième média filtrant comprend ou consiste en un matériau non tissé, avec de préférence le premier média qui inclut des couches individuelles enroulées dans un agencement multicouche, chaque couche individuelle étant plus mince qu'une couche individuelle de filtration constituée par le deuxième média filtrant.

Dans des formes de réalisation, l'élément filtrant maintient les moyens de filtration (des étages respectifs de filtration) espacés, par exemple écartés d'une distance radiale supérieure à 3 ou 4 mm. On comprend que :
- la première pièce et la deuxième pièce définissent entre elles une région intermédiaire où peut être disposé un média filtrant porté par la deuxième pièce (ce média pouvant être le média filtrant du deuxième étage de filtration, par exemple avec une finesse de filtration supérieure en présentant une structure non tissée dont l'épaisseur est supérieur à 1 ou 2 mm).
- le premier tube ajouré et le premier flasque permettent à la première pièce de porter le premier média filtrant en disposant ce dernier radialement plus à l'extérieur que la région intermédiaire.
- le premier média filtrant est adapté pour être perméable ou semi-perméable à l'huile, en ayant un effet coalesceur.
- le deuxième média est adapté pour être perméable à l'huile, en ayant un effet coalesceur.

Selon une particularité, lorsque la première pièce et la deuxième pièce définissent entre elles une région intermédiaire où est disposé au moins un média filtrant, le premier tube est radialement espacé d'une face latérale externe (radialement la plus externe) du deuxième étage de filtration et/ou l'élément filtrant peut permettre à des gouttelettes ayant traversé le premier étage de filtration de tomber/commencer à tomber par gravité vers le deuxième flasque, en amont du deuxième étage de filtration. Le média filtrant placé dans la région intermédiaire peut être :
- porté par la deuxième pièce ; et
- conçu pour permettre à des gouttelettes d'huile de coalescer en rejoignant l'espace intérieur creux.

Dans des exemples de réalisation de la cartouche, on peut prévoir l'une et/ou l'autres des dispositions suivantes :
- les seules parties métalliques de la cartouche appartiennent au boîtier et/ou sont extérieures à l'élément filtrant.
- l'élément de couvercle est métallique et relié, via une partie de liaison conductrice, au deuxième tube et à l'un au moins des médias du premier étage de filtration et/ou du deuxième étage de filtration.
- l'ossature est axialement en contact avec l'élément de couvercle.
- le contact, de préférence annulaire, de l'ossature sur l'élément de couvercle est réalisé par la projection axiale qui forme un élément barrière entre la zone amont et le conduit axial de sortie.
- l'élément de couvercle formant un connecteur de la cartouche pour permettre le montage rotatif amovible.
- l'élément de couvercle fait partie d'une extrémité de cartouche située à l'opposé du premier flasque, cette extrémité de cartouche formant une face de fixation et de connexion fluidique, de préférence en intégrant un joint annulaire disposé en périphérie/autour des passages ou ouvertures d'entrée de gaz.
- l'élément de couvercle est une partie de boîtier qui s'étend parallèlement au fond d'un composant principal ou bol du boîtier, axialement à l'opposé de ce fond dans la cartouche dont l'axe de montage peut être confondu avec l'axe central de l'élément filtrant.
- la cartouche inclut un seul élément d'étanchéité, formé par le joint annulaire monté sur la face de fixation et de connexion fluidique (côté extérieur / à l'opposé du volume intérieur), la deuxième pièce ne portant aucun élément d'étanchéité distinct de l'ossature.
- la cartouche filtrante est montée de façon amovible par sa face de connexion, par exemple en présentant des moyens fixation intérieurs dans un évidement central de d'une plaque (réalisé d'une seule pièce, de préférence métallique) constituant l'élément de couvercle..
- l'élément de couvercle présente un évidement central formant un organe de vissage femelle.
- l'élément filtrant est préassemblé par une étape de connexion entre la première pièce et la deuxième pièce.
- l'étape de connexion comprend ou est réalisée typiquement en même temps que : une étape de connexion d'une extrémité axiale annuaire de chaque média filtrant du premier étage avec le deuxième flasque (sur l'intérieur de celui-ci) ; et une étape de connexion d'une extrémité axiale annuaire de chaque média filtrant du deuxième étage avec le premier flasque (sur l'intérieur de celui-ci).

L'espace intérieur et l'espace intermédiaire peuvent être des espaces à symétrie de révolution. Dans des options, la première pièce a une forme de coque réalisée en un unique matériau plastique, possiblement en délimitant par une face interne cylindrique un creux central. La première pièce peut définir :
- un diamètre externe de l'élément filtrant, par un bord annulaire externe du premier flasque ; et
- un volume interne de la coque (qui est par exemple un espace vide de la cartouche constitué par le creux central, de section préférentiellement circulaire), accessible par un débouché axial présentant un diamètre.
   Typiquement, le premier tube a une longueur totale, mesurée depuis un plan du premier flasque, égale à une longueur du tube central, de sorte que le tube central est entièrement situé à l'intérieur du volume.

Selon des options, l'élément filtrant présente un deuxième flasque qui présente des rebords annulaires, saillants en direction du premier flasque. Une portion radiale (annulaire) du deuxième flasque supporte ou présente un moyen de liaison, par exemple par collage, avec l'extrémité annulaire de la deuxième pièce. Les deux rebords annulaires (projections annulaires) peuvent permettre de délimiter chacun une zone de réception, sur une face interne du deuxième flasque, pour permettre de disposer une couche de collage dont la circonférence extérieure est délimitée, respectivement, par l'un de ces rebords annulaires. Indépendamment de la réalisation particulière de relief(s) ou projections sur le côté intérieur du deuxième flasque (en périphérie du tube central), le deuxième flasque dispose, extérieurement/du côté de l'élément de couvercle, d'une projection axiale qui forme une extrémité de l'élément filtrant opposée (axialement) à l'autre extrémité de l'élément filtrant constituée par le premier flasque. Optionnellement, la projection axiale peut délimiter un diamètre interne plus large qu'un diamètre de l'espace intérieur creux délimité par une face cylindrique du deuxième tube.

L'élément filtrant peut être allongé suivant la direction de l'axe central, afin que l'ossature soit plus longue que large. Typiquement, la deuxième pièce constitue la pièce la plus allongée de l'élément filtrant qui ne comporte que deux pièces rigides constituées par les première et deuxième pièces. Le tube central de la deuxième pièce peut :
- présenter une zone d'étranglement, de préférence en présentant un bourrelet annulaire radialement saillant vers l'intérieur, pour définir une section de passage minimale d'accès à l'espace intérieur creux, à l'opposé du deuxième flasque ;
- et/ou être plus épais que le deuxième flasque.

Optionnellement, l'élément filtrant présente :
- une extrémité creuse annulaire, proximale de ou en contact avec l'élément de couvercle, formée par la projection axiale de section circulaire (ou plus généralement avec une géométrie annulaire), de préférence réalisée sans discontinuité (sans fente ou ouverture).
- un deuxième flasque qui est à ouverture unique centrale pour le passage sélectif d'un raccord (insert tubulaire creux) s'insérant au-delà d'une zone de vissage (zone filetée typiquement) ou de connexion avec verrouillage en rotation.
- dans les deux flasques, un même diamètre externe.

Selon une ou plusieurs particularités, la première pièce présente :
- dans le premier flasque une épaisseur moyenne qui est inférieure ou égale à une épaisseur moyenne du premier tube.
- du côté d'une face extérieure (formant une face externe de l'élément filtrant), un guide pour centre un élément de rappel élastique (ressort hélicoïdal par exemple) interposé entre un fond du boîtier et l'élément filtrant.
- un relief annulaire saillant formant le guide pour l'élément de rappel élastique.
- un rebord, de préférence annulaire, de maintien du média filtrant le plus externe (radialement) dans l'élément filtrant, le rebord formant une projection (courte) parallèle au premier tube en s'étendant depuis un même plan du premier flasque, qui est défini par la partie radiale d'obturation du flasque.

Après avoir fixé les moyens de filtration contre les tubes de support correspondants, l'opération d'assemblage peut être rapide, sans recours à une pièce d'ossature additionnelle (flasque ou autre pièce conçue séparément des flasques). Lorsqu'un surmoulage d'un média filtrant est prévu sur un tube correspondant, celui-ci peut être fait sur l'extérieur de ce tube (sur une face extérieure de coque/tube), avec typiquement une ossature non recouverte/dépourvue de média filtrant sur la face interne du tube central.
Dans tout ce qui suit, le flux gazeux à épurer est appelé air ou flux d'air. Bien entendu, la cartouche peut séparer le liquide huileux de tout type de flux gazeux dont le composant principal est un composant de l'air.

Dans des formes de réalisation de l'élément filtrant, il peut être prévu une ou plusieurs des particularités suivantes :
- un tube de l'ossature inclut un bourrelet, des nervures ou saillies, par exemple saillantes radialement à l'opposé d'une couche annulaire/tubulaire de filtration portée par ce tube.
- l'épaisseur d'un média et/ou de chaque média est comprise entre 3 et 20 mm, de préférence entre 4 et 10 mm.
- l'ossature présente, sur les deux flasques, deux rebords saillants axialement l'un vers l'autre, de sorte que le premier média filtrant est maintenu entre une face latérale ajourée du premier tube et les deux rebords.
- l'ossature est intégralement en matériau plastique, sans partie métallique dans les deux pièces et/ou possiblement avec une intégration d'une partie plastique électriquement conductrice, par exemple dans le deuxième flasque.

Selon un autre aspect, il est proposé un procédé d'assemblage d'une cartouche de filtration, de préférence une filtration huile-gaz (pour séparer l'huile liquide), qui présente un boîtier externe logeant un élément filtrant en incluant un raccord de fixation (fixation avec mouvement de rotation pour le verrouillage, par exemple un vissage) permettant de monter cette cartouche de manière amovible sur un support suivant un axe (axe du montage rotatif), le procédé comportant les étapes suivantes :
- former deux tubes ajourés dans deux pièces distinctes dont une première pièce/élément structurel inclut un premier tube et un premier flasque, et l'autre est une deuxième pièce qui inclut un deuxième flasque et un deuxième tube dit tube central moins large que le premier tube, le deuxième flasque perpendiculaire au tube central ayant une ouverture centrale pour permettre l'accès axial à un espace intérieur creux délimité par le tube central ;
- solidariser un premier étage de filtration à la première pièce afin de permettre une première filtration autour du premier tube ;
- solidariser un deuxième étage de filtration à la deuxième pièce afin de permettre une deuxième filtration autour du tube central ;
- assembler l'élément filtrant par interconnexion de la première pièce qui supporte le premier étage de filtration et de la deuxième pièce qui supporte le deuxième étage de filtration, en insérant le tube central dans le premier tube (qui peut rejoindre le premier flasque dans un état final d'insertion), de sorte que l'élément filtrant a une ossature constituée de ces deux pièces, avec le deuxième étage de filtration radialement espacé du premier étage de filtration pour être plus éloigné d'un axe central de l'élément filtrant qui est un axe de symétrie pour chacun des tubes ;
- insérer l'élément filtrant dans un composant creux ou bol du boîtier externe puis enfermer l'élément filtrant dans le boîtier externe, en fixant sur le composant creux un élément de couvercle pourvu du raccord de fixation avec un passage de sortie de flux épuré qui communique avec l'espace intérieur creux, ledit élément de couvercle délimitant en outre au moins un passage d'entrée de flux admis/à filtrer.

Le procédé peut limiter le nombre de pièces structurelles de l'élément filtrant pour maintenir les différents moyens/étages de filtration et ainsi le nombre de fixations entre ces différentes pièces. Le montage est aisé et compatible avec le recours à un boitier (avec son élément de couvercle) compatible avec des opérations et/ou machines existantes pour la solidarisation à une tête de connexion.
La fixation permise par le raccord prévu dans l'élément de couvercle (rigide) peut être de type à vissage ou à connexion baïonnette.

Une fois les deux coques/pièces fournies, le procéder peut se dérouler avec étapes ou opérations successives suivantes :
- on solidarise les médias de filtration sur les deux pièces, en laissant une face axiale de média non recouverte pour chacun de ces médias ;
- on solidarise les deux coques ou pièces entre elles pour obtenir d'un bloc l'élément filtrant ;
- on insère l'élément filtrant à l'intérieur du composant creux du boîtier ;
- on bouche l'ouverture du composant creux pour fermer la chambre de filtration, en interposant axialement l'élément de couvercle entre l'ossature et un élément annulaire de fixation/liaison qui étanchéifie le boîtier, de préférence avec une opération de sertissage d'un couvercle incluant l'élément de couvercle.
   Eventuellement on ajoute un tube rigide (raccord pour la fixation à la tête de connexion) à partie insérable qui vient se loger dans l'espace intérieur creux de l'élément filtrant, possiblement en établissant un contact intérieur contre un bourrelet annulaire prévu sur le tube central.

Les différentes connexions sur l'intérieur des flasques de l'élément filtrant et les solidarisations de média sur les tubes respectifs peuvent ainsi être réalisées en un minimum d'étapes. Ceci est avantageux pour un montage de deux étages qui présente(nt) chacun une ou plusieurs couches enroulée(s) consistant en au moins un média filtrant. Le premier flasque bouche une extrémité du premier tube, de sorte qu'il constitue un flasque de type fermé, qui permet d'obturer un accès axial du premier tube opposé à la sortie pour gaz épuré de l'élément filtrant, avec une disposition de flasque perpendiculaire à un axe longitudinal du premier tube).

Selon une particularité, l'interconnexion, réalisée de préférence sans indexation en rotation, s'effectue jusqu'à une fin d'insertion du tube central qui coïncide avec un appui axial du deuxième étage de filtration sur une portion radiale du deuxième flasque servant de support, par un même côté intérieur, d'extrémités axiales annulaires respectives du premier étage de filtration et du deuxième étage de filtration. Dans une variante, une indexation en rotation est prévue pour l'assemblage de l'élément filtrant.
Le volume interne (chambre de filtration) de la cartouche peut être divisé en deux zones (amont et aval) par l'élément filtrant sans recours à un joint élastomère ou joint annulaire similaire devant être rapporté sur l'élément filtrant.
De préférence, pour atteindre l'état final inséré de l'élément filtrant, l'élément de couvercle est directement engagé, par un contact axial, contre l'ossature en poussant une projection axiale de la deuxième pièce qui fait saillie, à l'opposé du tube central, depuis la portion radiale du deuxième flasque. L'appui axial des extrémités axiales des étages se fait par exemple simultanément, la portion radiale pouvant former une surface interne plane en regard des étages de filtration. Eventuellement, les extrémités axiales des étages de filtration peuvent être coplanaires.

Selon un aspect, il est proposé une utilisation de la cartouche filtrante telle que définie plus haut, pour filtrer un flux d'air comprimé. Typiquement, la cartouche qui permet ce type de filtration est vissée, par le raccord de fixation, sur une tête de connexion appartenant à système de lubrification d'un mécanisme. Après ce vissage ou connexion similaire, la cartouche peut permettre de fournir un flux d'air comprimé purifié par déshuilage. Un effet de coalescence est prévu dans un moins un des moyens/étages de filtration. Dans cette configuration/utilisation, la cartouche est configurée de sorte que :
- un raccord mâle (formant une sous-partie de la base de montage ou tête de connexion) s'insère dans le tube central en réalisant un contact radial contre une face interne du tube central ;
- l'au moins un passage d'entrée reçoit de l'air comprimé ressortant d'une zone de lubrification du mécanisme.

Les moyens de filtration de la cartouche, répartis autour de l'axe central à différentes positions, sont aptes à être agencés dans un volume réduit/compact (le volume intérieur du boîtier pouvant être inférieur à 4 ou 5 L) et pour permettre une filtration d'un débit élevé de gaz (optionnellement un débit d'air ou gaz similaire), avec par exemple une capacité de filtration supérieure à 150 ou 300 m³/h permise pour la cartouche, éventuellement pouvant atteindre ou dépasser 500 m³/h, pour un fonctionnement compatible avec des pressions de service supérieures à une dizaine ou une quinzaine de bars. Optionnellement, la cartouche constitue un déshuileur submicronique permettant d'éliminer les brouillards d'huile et les éventuelles fines particules.
Par ailleurs, en l'absence de partie métallique structurelle en contact avec les médias des étages de filtration, on évite des problèmes de corrosion/altération de parties métalliques.

### Brève description des dessins

D'autres caractéristiques, détails et avantages apparaîtront à la lecture de la description détaillée ci-après, et à l'analyse des dessins annexés, sur lesquels :
La Figure 1 est une vue en coupe longitudinale d'une cartouche pourvue de deux tubes qui font partie de l'ossature de l'insert ou élément filtrant, avec l'un des tubes qui est engagé sur un raccord mâle d'un support de cartouche, conformément à un mode de réalisation.
La Figure 2 est une vue en perspective illustrant en perspective, ici avec omission des médias filtrants, d'une paire de pièces constituant l'ossature de l'élément filtrant équipant une cartouche à visser telle que celle visible en figure 1.
La Figure 3 est un logigramme montrant un exemple de succession d'étapes dans un procédé d'assemblage d'une cartouche, selon un mode de réalisation dissociant la fixation du moyen filtrant le plus extérieur sur une première pièce d'ossature, de la fixation des moyens de filtration suivants sur une deuxième pièce de l'ossature.
La Figure 4A montre, par une vue de détail, un exemple de moyens de fixation participant à raccorder au moins un des tubes, par une extrémité annulaire, sur le flasque appartenant à l'autre pièce de l'ossature.
La Figure 4B représente, avec une coupe longitudinale, un exemple de réalisation obtenu par collage, ici dans des zones distribuées sur l'intérieur des flasques de façon compatible avec le cloisonnement permis pas le premier tube intercalé entre les deux moyens/étages de filtration, de sorte que les deux pièces de l'ossature sont rendues inséparables.
La Figure 5 représente une coupe longitudinale d'une cartouche, dans une option de réalisation avec un couvercle métallique et un élément conducteur permettant d'éviter un phénomène de décharge électrostatique au niveau des moyens de filtration.
La Figure 6 représente schématiquement une utilisation de la cartouche pour purifier un gaz chargé en huile provenant d'un circuit à flux gazeux comprimé.

### Description de modes de réalisation

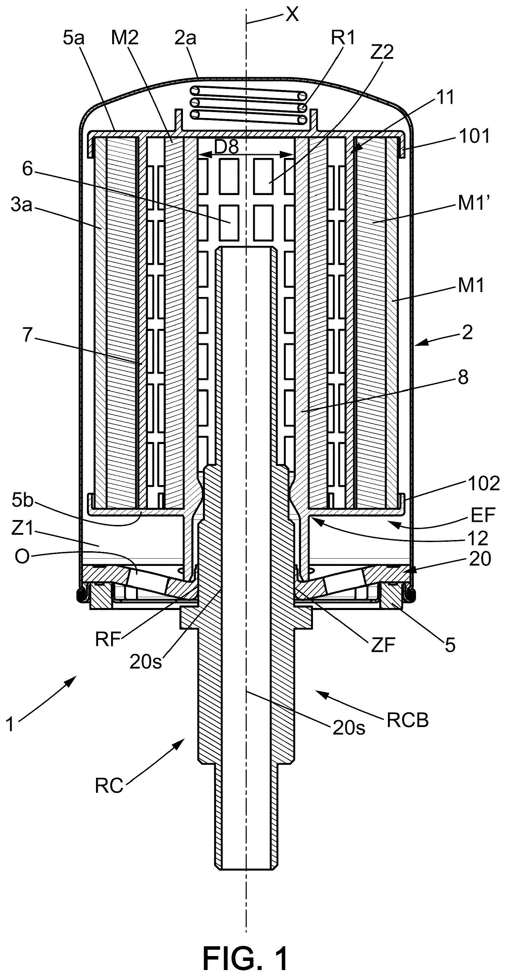

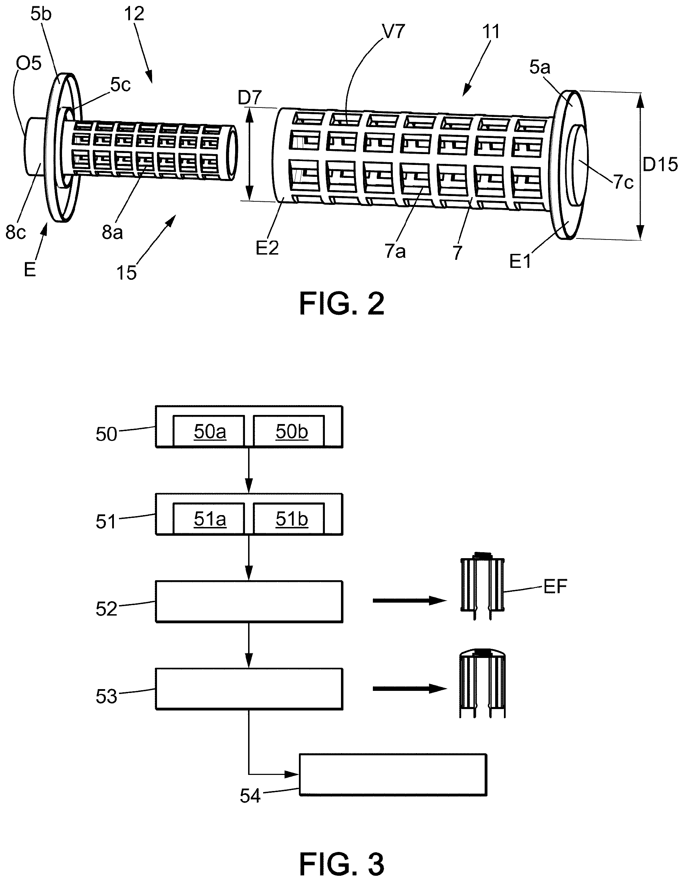

En référence aux figures 1 et 2, il est montré un agencement assemblé d'une cartouche filtrante 1 de filtration sur un insert de fixation formant un raccord RC de montage de type tube creux, avec une zone de fixation périphérique prévue sur ce raccord RC. La cartouche 1 comprend un boitier extérieur 2, un élément filtrant EF logé à l'intérieur d'un composant creux ou bol de ce boîtier 2 et une interface de positionnement de l'élément filtrant EF permettant le montage de ce dernier suivant un axe de montage. L'élément filtrant EF peut présenter un axe central X, par exemple de sorte que l'élément filtrant EF présente une symétrie de révolution autour de cet axe central X. Le composant creux du boitier 2 peut être réalisé en une seule pièce. La fermeture du boîtier 2 s'obtient en obturant l'ouverture unique du composant creux par un couvercle, après avoir préalablement installé l'élément filtrant, possiblement en comprimant ou énergisant un élément de rappel élastique R1 (par exemple sous forme de ressort) se trouvant engagé contre une extrémité axiale de l'élément filtrant EF située à l'opposé de l'ouverture unique du composant creux.

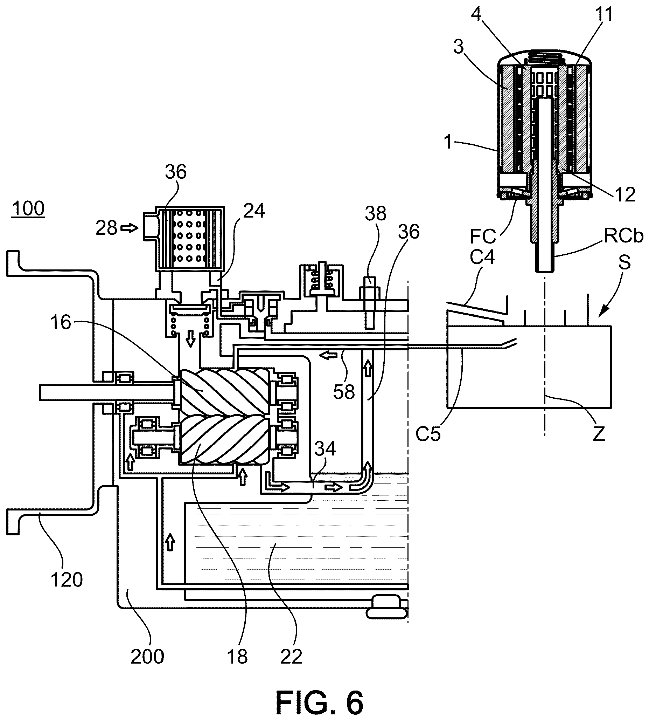

Le boîtier 2 peut comporter un sommet bombé 2a (formant un fond du composant creux) et une paroi latérale s'étendant autour de l'élément filtrant EF depuis le sommet bombé 2a jusqu'à une extrémité de connexion du boîtier 2. La paroi latérale est de préférence sensiblement cylindrique et dépourvue d'ouverture, l'entrée pour le flux d'air (avec typiquement une distribution de passage d'entrée O) et la sortie d'air épuré 20s étant agencées dans l'extrémité inférieure située à l'opposé du fond de la cartouche 1. L'extrémité de connexion permet de réaliser une face de connexion FC de la cartouche 1 (comme visible sur la figure 6) et peut être ici constituée par une paroi qui s'étend transversalement, par exemple sensiblement perpendiculairement, à l'axe central X de l'élément filtrant EF.

Comme bien visible sur les figures 1 et 6, la cartouche 1 forme un filtre d'épuration d'une partie liquide d'un flux admis, qui peut être un flux gazeux, en définissant une chambre de filtration correspondant au volume intérieur du boîtier 2. Une cartouche de filtration gaz-liquide peut être obtenue. L'installation avec un tel filtre comporte une tête connexion S réutilisable et la cartouche filtrante 1 qui peut se remplacer. Il est prévu deux moyens ou étages de filtration 3, 4 séparés (typiquement espacés l'un de l'autre) dans l'élément filtrant EF. Dans l'exemple non limitatif de la figure 1, l'élément filtrant EF comporte deux flasques 5a, 5b, entre lesquels s'étendent (de façon enroulée ou annulaire) les médias respectifs de filtration qui constituent les étages de filtration. Chaque média filtrant s'étend parallèlement à l'axe central X, en formant une paroi tubulaire à travers lequel peut passer le gaz/flux à filtrer, par exemple en permettant de déshuiler ce flux. Plus largement une partie fluide d'un composant (indésirable) qui est transportée dans le flux admis peut être séparée par la combinaison des médias prévus dans ces étages de filtration 3, 4.
L'élément filtrant EF inclut une ossature 15 incluant les deux flasques, qui sont respectivement : un premier flasque 5a fermé qui se place à l'opposé de la face de connexion FC, donc à l'opposé de l'élément de couvercle 20 qui inclut les passages d'entrée O ; et un deuxième flasque 5b avec une ouverture centrale O5 permettant une circulation axiale du flux purifié (flux d'air dans le cas de la figure 6) qui peut sortir de la cartouche 1 par sa sortie centrale, au travers de l'élément de couvercle 20 et de la face de connexion FC. La cartouche 1 peut inclure un joint externe, par rapport au boîtier 2, qui est un élément d'étanchéification/joint annulaire disposé en périphérie/autour des passages ou ouvertures d'entrée O.

En référence à la figure 2, l'ossature 15 est conçue en seulement deux pièces 11, 12 dont la première pièce 11 inclut le premier flasque 5a, fermé, et la deuxième pièce 12 inclut le deuxième flasque 5b muni de son ouverture O5. Ces deux flasques 5a, 5b définissent des extrémités axiales opposées E1, E de l'élément filtrant EF. Le tube central 8 peut inclure une extrémité formant une extrémité 12a ou bord annulaire libre de la deuxième pièce. L'ossature 15 présente en outre un agencement à deux tubes 7, 8, qui peuvent être concentriques autour de l'axe central X. Le premier flasque 5a est intégralement formé avec le premier flasque 5a dans la première pièce 11 tandis que le deuxième tube 8 qui est un tube central est intégralement formé avec le deuxième flasque 5b dans la deuxième pièce 12.
Comme bien visible par exemple sur la figure 1, chacun des deux tubes 7, 8 est ajouré (avec des ouvertures radiales respectives 7a et 8a), ce qui permet à l'élément filtrant EF de réaliser une filtration centripète, le flux d'air ou flux admis pouvant circuler tout d'abord dans le premier étage de filtration 3 porté par la première pièce 11 en s'étendant autour du premier tube 7, avant de traverser ensuite le deuxième étage de filtration 4 porté par la deuxième pièce en s'étendant autour du/contre le tube central 8.

La face extérieure du premier tube 7 permet de supporter une couche de média filtrant du premier étage de filtration 3. La face extérieure du deuxième tube/tube central 8 peut supporter une couche de média filtrant du deuxième étage de filtration 4 qui est une couche qui recouvre la totalité du tube (ou tout du moins toutes les ouvertures radiales 8a de ce tube 8), jusqu'à l'extrémité 12a, tandis que la face intérieure de ce tube central 8 permet de délimiter un espace intérieur 6 creux de l'élément filtrant EF.
Dans la première pièce 11, qui inclut un le premier tube 7 plus large que le tube central 8, il est prévu que les dimensions du premier flasque 5a avec un diamètre externe D15 soient similaires ou identiques à celle du deuxième flasque 5b. La figure 2 illustre le cas, non limitatif, dans lequel l'élément filtrant EF présente un diamètre extérieur D15 qui correspondant à une dimension externe commune aux deux flasques 5a, 5b.

La première pièce 11 s'étend longitudinalement depuis le premier flasque 5a, autour de l'axe central X, jusqu'à une extrémité annulaire E2 qui est reliée rigidement au deuxième flasque 5b, lors de l'unique étape d'interconnexion des pièces 11 et 12 permettant d'obtenir l'ossature 15, tout en finalisant l'assemblage de l'élément filtrant EF.
L'élément filtrant EF sépare le volume intérieur du boîtier 2 en une zone amont Z1 et une zone aval Z2. L'élément filtrant EF est sensiblement tubulaire et écarté de la paroi latérale du boîtier par un espace périphérique qui fait partie de la zone amont Z1. La zone amont Z1 correspond à un espace d'entrée du flux (chargé en liquide/huile) admis dans la cartouche 2, avant filtration, en partie basse du filtre 1 sur cas illustré en figure 1 et sur la périphérie. La zone amont Z1 est ainsi en communication avec l'entrée de la cartouche 1. La zone aval Z2 correspond à l'espace intérieur 6 dans lequel circule l'air déshuilé ou flux épuré analogue, et peut inclure une sous-zone complémentaire délimitée par une projection axiale 8c, annulaire, du deuxième flasque 5b qui rejoint l'élément de couvercle 20. Cette zone Z2 communique avec le passage de sortie de flux épuré (gaz/air épuré par exemple).

L'élément de couvercle 20, appartenant au boîtier 2, inclut une région ou moyen de fixation RF qui fait partie du raccord de la cartouche 1 pour permettre son montage avec fixation/verrouillage en rotation, suivant un axe Z de montage rotatif. La région ou moyen de fixation RF permet l'engagement en rotation avec la zone de fixation ZF complémentaire. On comprend que le conduit axial de sortie formé par la projection 8c et le passage de sortie 20s peuvent être alignés. De préférence, l'élément de couvercle 20 peut délimiter une section de passage légèrement plus étroite qu'un diamètre intérieur de la projection 8c, avec une zone filetée de délimitation de cette section de passage, la zone filetée formant la région de fixation RF.

### Option(s) de réalisation des pièces structurelles de l'élément filtrant

Plus largement, la première pièce 11 peut être une pièce plastique moulée, rigide, de préférence moulée à partir d'un matériau thermoplastique. Les ouvertures radiales 7a du tube 7 peuvent résulter de ce moulage, avec un format d'ouverture qui peut présenter des bords droits, dont deux bords longitudinaux.
La deuxième pièce 12 peut être une pièce plastique moulée, rigide, de préférence à partir d'un matériau thermoplastique. Les ouvertures radiales 8a du tube 8 peuvent résulter de ce moulage, avec un format d'ouverture avec des bords droits, dont deux bords longitudinaux.

Dans la deuxième pièce 12, la projection axiale 8c peut s'étendre sur l'extérieur, de façon à se situer, dans la cartouche assemblée, à l'opposé d'un guide 7c, par exemple creux, formée sur une face extérieure du premier flasque 5a (formant une face externe de l'élément filtrant EF). Comme visible dans l'exemple de la figure 1, le guide 7c, annulaire ou formé de reliefs distribués de façon annulaire, peut permettre de centrer l'élément de rappel élastique R1 (ressort hélicoïdal par exemple) interposé entre un fond/sommet du boîtier 2 et l'élément filtrant EF. Ce guide 7c est formé, dans la première pièce 11, à l'opposé du tube 7 et le premier flasque 7c forme un disque entre ces deux éléments.

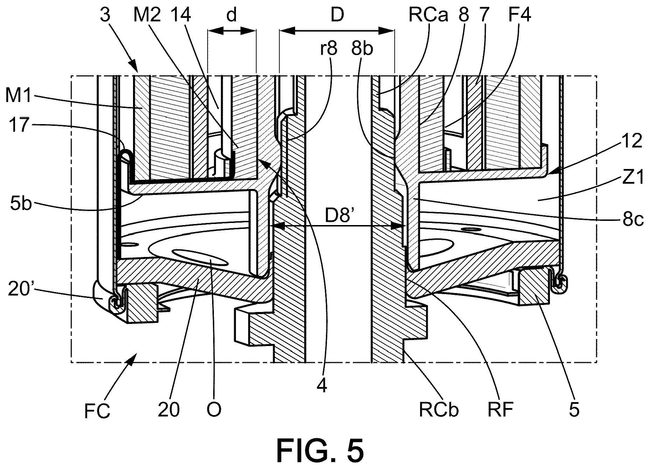

Le deuxième flasque 5b présente une face interne annulaire qui peut être adaptée pour permettre l'insertion de l'extrémité annulaire E2 de la première pièce 11 dans une région intermédiaire (radialement) entre un rebord externe 102, typiquement annulaire, du flasque 5b et une courte projection 5c, annuaire, saillante sur l'intérieur et adaptée pour retenir une extrémité axiale d'un média filtrant M2 du deuxième étage de filtration 4.
La projection axiale 8c peut délimiter une section de passage légèrement élargie, par rapport à une section plus intérieure du tube 8, typiquement en délimitant un diamètre interne D8' (figure 5) plus large qu'un diamètre D8 (figure 1) de l'espace intérieur creux 6 délimité par la face cylindrique (intérieure) du tube 8.

En référence à la figure 1, on comprend que la deuxième pièce 12 peut constituer la pièce la plus allongée de l'élément filtrant EF qui ne comporte que deux pièces rigides/structurelles constituées par les première et deuxième pièces 11, 12. Sur la figure 2, on peut voir que les deux pièces sont creuses à la façon d'une coque, avec un passage longitudinal à débouché unique formé dans le tube 7 et un passage longitudinal à deux débouchés opposés dans le tube 8. La première pièce 11 peut avoir une forme de coque en étant réalisée en un unique matériau plastique.

Cette première pièce 11 définit, d'une part un diamètre externe D15 de l'élément filtrant EF, par un bord annulaire externe du premier flasque 5a, et d'autre part un volume V7 interne de la coque, accessible par un débouché axial présentant un diamètre D7 suffisamment large pour l'insertion complète du tube 8 du volume V7. On peut noter que, du côté du premier flasque 5a, plusieurs ouvertures 8a qui débouchent radialement dans la zone d'aval Z2 délimitée par la portion radiale PR sont très proches du flasque 5a et, optionnellement moins écartées, axialement, de la première extrémité E1 que ne le sont les ouverture radiales 7a les plus proches de cette extrémité E1.

L'ossature 15 peut permettre une intégration d'au moins deux médias filtrants de conception/structure différente, par exemple avec deux médias filtrants M1, M1' rassemblés dans le premier étage de filtration 3 et disposés plus à l'extérieur (radialement) que le premier tube 7, et au moins un média filtrant M2 disposé, de manière radialement espacée plus à l'intérieur que le premier étage 3, de préférence entre le tube central 8 et la courte projection 5r (possiblement de taille inférieure à 10 ou 13 mm). Le média filtrant M2, écarté du premier tube 7, peut constituer tout ou partie du deuxième étage de filtration 4.
Le plus extérieur des médias M1 peut définir la face d'entrée 3a périphérique de l'élément filtrant qui s'étend parallèlement à l'axe centrale le long de la zone amont Z1.

### Moyens de filtration constitutifs des étages de filtration

En référence à la figure 5, montrant plus en détail la face de connexion FC, on comprend que l'ossature 15 peut intégrer une région intermédiaire 14, entre les deux tubes 7 et 8 qui n'est pas entièrement remplie par le deuxième étage de filtration 4. La première pièce 11 et la deuxième pièce 12 définissent ainsi, entre elles, la région intermédiaire 14 où est disposé au moins un média filtrant M2 porté par la deuxième pièce 12, de telle façon qu'une face d'entrée F4 de ce deuxième étage 4 soit non recouverte, avec possibilité pour des gouttelettes d'huile ressortant (par coalescence, typiquement) du premier étage 3 de tomber ou de se décaler axialement, avant de traverser le deuxième étage de filtration 4.
Avant de constituer l'ossature 15 par fixation rigide, le média filtrant M2 peut être porté par la deuxième pièce 12, en étant assemblé sur le tube central 8 par l'extérieur, tandis que le ou les médias filtrants M1, M1' peuvent être portés par la première pièce 11, en étant assemblé(s) sur le tube central 7 par l'extérieur.

Au moins dans un média M1, M1' constitutif du premier étage de filtration 3, on peut prévoir que chaque couche individuelle du matériau filtrant correspondant présente une perméabilité à l'air supérieure à 150 ou 180 L/m²s, telle que mesurée suivant un standard DIN 53'887. Plus largement, on peut prévoir pour le premier étage de filtration 3 un média filtrant M1, M1' qui est à effet coalesceur d'huile et/ou déshuileur et qui limite les effets de perte de charge.

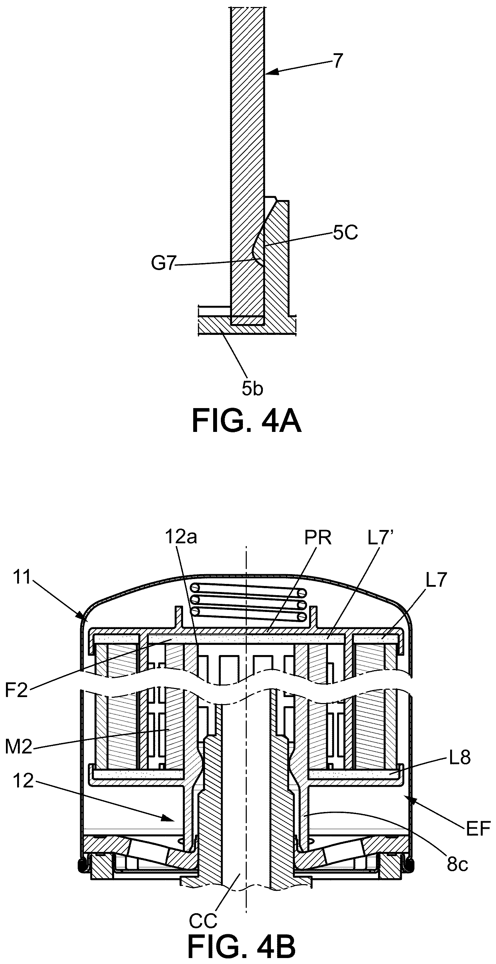

La figure 4A montre qu'ensuite, après avoir mis en place les étages de filtration 3, 4, une connexion par encliquetage, par utilisation de clips, peut être réalisée pour qu'une extrémité de tube d'une pièce 11 ou 12 (ici le tube 7) soit raccordée fixement au flasque de l'autre pièce 12 ou 11. Une gorge G7 peut être prévue sur l'extrémité d'un des tubes 7, 8, pour la venue en prise d'un bord connecteur à encliquetage ou de clips 5C prévu(s) sur l'intérieur du flasque. Plus largement, les zones pour la réalisation de la connexion peuvent être proches des flasques 5a, 5b, pour ne pas interférer avec la filtration centripète
Un mode de liaison par embossage peut aussi être réalisé, le cas échant avec une compression du média par son extrémité en contact axial avec un flasque. La figure 4B montre, en variante ou en complément, la possibilité d'encoller l'intérieur des flasques 5a, 5b pour permettre de fixer les extrémités axiales annulaires des étages de filtration 3, 4.

### Exemple(s) d'assemblage d'une cartouche filtrante avec deux étages

Un procédé d'assemblage d'une cartouche de filtration 1, telle que celle montrée sur la figure 1, peut présenter un nombre réduit d'étapes de fixation. En référence à la figure 3, une étape 50 de fourniture des pièces de l'ossature 15 est réalisée, avec la formation :
- à l'étape 50a de moulage, de la première pièce 11 en un seul bloc structurellement homogène (mono-matériau par exemple) ; et
- à l'étape 50b de moulage, de la deuxième pièce 12 en un seul bloc structurellement homogène (mono-matériau par exemple).
   Le moulage peut être du type à injection (sans soufflage). Plus largement, on comprend que la mise en forme du matériau plastique de ces deux pièces 11, 12 permet de former les deux tubes ajourés 7, 8 dans deux pièces distinctes qui incluent chacun un flasque d'extrémité adapté.

Une phase de fixation 51 est ensuite réalisée pour monter et solidariser chacun des étages de filtration 3, 4 à un tube correspondant. Cette phase de fixation 51 prévoit de :
- solidariser 51a le premier étage de filtration 3, en réalisant typiquement un enroulement d'une ou plusieurs couches d'au moins un média filtrant M1, M1' autour du premier tube 7, l'enroulement pouvant être par exemple obtenu préalablement à la fixation sur le premier tube 7 ;
- solidariser 51b le deuxième étage de filtration 4, en montant typiquement un enroulement, sous forme d'une ou de plusieurs couches, d'au moins un média filtrant M2 autour du tube central 8.
   Il s'agit alors d'opérations de fixations distribuées, qui permettent d'obtenir deux modules avant une opération de connexion entre ces deux modules, par insertion du deuxième étage/moyen de filtration structuré par le tube central 8 dans le creux ou volume V7 du premier tube 7 et fixation par les flasques 5a, 5b à la fin de cette insertion. Cette opération de connexion correspond à une étape 52 d'assemblage de l'élément filtrant EF. Les médias M1, M1', M2 peuvent être sélectionnés pour permettre une filtration huile-gaz de la cartouche 1.

Les solidarisations 51a, 51b correspondent ainsi à des étapes préliminaires (par exemple deux étapes séparées) de fixation de médias M1, M1', M2. Lors de ces étapes préliminaires de fixation de médias, au moins une couche de collage L7, L7', L8 ou une matière de fixation peut être déjà pré-déposée sur l'intérieur de l'un et/ou l'autre des flasques 5a, 5b, sur une zone annulaire de maintien. Comme dans l'exemple de la figure 4B, on comprend que le premier flasque 5a permet de définir deux zones de connexion continues mais séparées entre elles, avec la possibilité de recevoir une première couche de collage L7 servant à la fixation axiale du premier étage de filtration 3 et une deuxième couche de collage L7' servant à la fixation axiale du deuxième étage de filtration 4, lesquelles peuvent être séparées l'une de l'autre par un tronçon annulaire du tube 7 au niveau duquel ce dernier rejoint le flasque 5a dans une section à profil en T. La première pièce 11 inclut une partie radiale d'obturation PR prévue dans le premier flasque 5a pour fermer l'espace intérieur creux 6, du côté d'un fond de la cartouche axialement opposé au conduit axial de sortie de la face de connexion FC. Que l'extrémité ou bord annulaire 12a soit encliquetée ou non sur le premier flasque 5a et/ou noyé dans la couche de liaison ou collage L7' (couche déposée sur la portion radiale du premier flasque 5a, on comprend qu'il est permis de réaliser une première jonction annulaire entre la première pièce 11 et la deuxième pièce 12 qui est une jonction :
- adjacente à la partie radiale d'obturation PR ; et
- formée sur l'extrémité ou bord 12a, en se situant radialement plus intérieure qu'une zone annulaire F2 de fixation axiale du média filtrant M2 contre le premier flasque 5a.

Plus largement, après avoir structuré les étages de filtration par les deux solidarisations 51a, 51b, on comprend que le procédé d'assemblage prévoit de finaliser l'obtention d'un élément filtrant (ici à deux étages de filtration), à l'étape 52 par un assemblage effectif pour que l'élément filtrant EF dispose de ses deux extrémité opposées E1, E (dont l'une est fermée) qui enserrent les médias respectifs M1, M1', M2. L'espace intérieur du tube central 8 est alors bouché par la portion radiale PR du premier flasque 5a et devient l'espace intérieur creux 6 de l'élément filtrant EF. Plus généralement, on comprend que cet espace intérieur creux 6 est uniquement délimité (latéralement et axialement) par des parties en plastique sans métal. L'étape 52 inclut l'interconnexion de la première pièce 11 qui supporte le premier étage de filtration 3 et de la deuxième pièce 12 qui supporte le deuxième étage de filtration 4, de sorte que l'élément filtrant EF a une ossature 15 à double tube constituée des deux pièces 11, 12, avec le deuxième étage de filtration 4 radialement espacé du premier étage de filtration 3 (pour être plus éloigné de l'axe central X).

Dans certaines options, comme dans le cas visible sur la figure 5, l'élément filtrant EF peut en outre intégrer une ligne conductrice 17 pour un effet de liaison de tout ou partie des médias M1, M1', M2 des étages de filtration, à la masse via le couvercle, en particulier via l'élément de couvercle 20 qui est métallique et porte un filetage/zone de fixation ZF. Dans le cas illustré ici, un élément conducteur forme la liaison ou ligne conductrice 17 qui s'étend en périphérie du deuxième flasque 5b dans sa portion de connexion à l'élément de couvercle 20. Une autre portion de cette ligne conductrice 17 peut longer, en s'étendant radialement vers l'intérieur, le deuxième flasque 5b à l'un au moins des médias du premier étage de filtration 3 et/ou du deuxième étage de filtration 4. On comprend que l'élément conducteur peut aussi être intégré, par exemple sous forme de couche chargée ou conductrice entrant dans la constitution du deuxième flasque 5b en s'étendant jusqu'à l'élément de couvercle 20. Plus largement, un effet de dissipation des charges électriques peut être prévu par toute partie ou ligne conductrice 17 dont une portion est portée par l'élément filtrant EF.

A nouveau en référence à la figure 3, après avoir obtenu l'élément filtrant EF avec ou sans intégration d'une fonction de dissipation de charges électriques, le procédé comprend une étape 53 de mise en place de l'élément filtrant EF dans un composant creux ou bol du boîtier 2, en insérant l'élément filtrant par le coté de son premier flasque 5a vers le sommet 2a au fond du composant creux. Les flasques 5a, 5b, avec des rebords respectifs 101, 102 (en matériau plastique qui peut être le matériau constitutif des pièces 11, 12), protègent le premier média M1 lors de cette insertion. Le guide 7c, dont un exemple de conception est bien visible sur la figure 2, entoure ou est disposé de façon annulaire autour de l'élément de rappel élastique R1 à la fin de cette insertion, avant de réaliser l'étape 53 de fermeture du boîtier externe 2. La position de fermeture par l'élément de couvercle 20 est verrouillée par utilisation d'un élément 20' de retenue, disposé de façon annulaire sans recouvrir le passage de sortie 20s ni la ou les ouvertures O prévues autour/à distance de l'axe central X dans cet élément de couvercle 20.
Cet élément 20' de retenue recouvre une portion de marge de l'élément de couvercle 20 et peut délimiter une gorge de réception du joint annulaire 5. L'élément 20' peut être sous forme de tôle ou feuille métallique, solidarisée au préalable (par exemple en étant soudé), avant l'étape 53 de fermeture, à l'élément de couvercle 20. Un sertissage est par exemple réalisé sur un bord externe de l'élément 20 et sur une extrémité annulaire du composant creux, autour de l'ouverture de boîtier ayant permis l'insertion de l'élément filtrant EF.

Dans le cas non limitatif de la figure 5, l'élément de couvercle 20 est directement engagé, par un contact axial, contre l'ossature 15 en poussant la projection axiale 8c de la deuxième pièce 12. Une projection de centrage peut être prévu, intérieurement et en position adjacente à la région de fixation RF, afin de s'engager, avec effet de guidage, dans la projection axiale 8c.
Le raccord RC, en prise avec l'élément de couvercle, peut être une partie fixe qui reste à demeure avec la tête de connexion, en ayant par exemple la partie RCb, extérieure par rapport à la cartouche 1, qui reste solidaire du reste de la tête de connexion S, tandis que la partie d'insertion RCa retient par zone de fixation ZF la cartouche 1 dans sa position de montage.

### Exemple(s) de support - Applications

Dans l'exemple non limitatif de la figure 1, la cartouche 1 est représentée vissée sur le raccord RC rigide, qui est par exemple sous forme de manchon métallique. On comprend que le raccord fait partie d'une base de montage ou tête de connexion S destinée à être raccordé à un circuit d'air passant par une zone de lubrification. La tête de connexion S peut présenter une entrée, sous forme par exemple de canal C4, pour l'air brut chargé en huile/brouillard d'huile, et une sortie - possiblement avec une extension plus basse et correspondant à une voie divergente - pour l'air purifié.
Le raccord RC avec son insert central ou partie d'insertion RCa a ici, sur les figures 1 et 6, un format de manchon axial solidarisé de façon permanente à une interface de la tête de connexion S. Ce genre d'interface de connexion munie du raccord RC permet de fixer rapidement et facilement la cartouche filtrante 1, et convient pour l'utilisation de cartouches filtrantes conventionnelles (de type vissable/spin-on) dont le boîtier 2 est formé à partir d'une fine couche de métal.

On peut noter que l'extrémité inférieure de la pièce formant le raccord RC peut permettre de relâcher l'air dans une zone inférieure de la tête de connexion, une fois la cartouche montée/assemblée, et verrouillée suivant son axe de montage Z. Dans certaines options, tout ou partie de la tête de connexion peut être réalisée en un matériau plastique, par exemple en étant moulée, afin d'alléger le poids du circuit.

Plus largement, la cartouche filtrante peut former un filtre dans un circuit d'air ou de flux gazeux dont l'accès et le reflux sont permis par la tête de connexion S. La cartouche filtrante peut permettre de filtrer un flux d'air comprimé en équipant une machine ou un appareil pourvu d'un système de lubrification d'un mécanisme en affectant/chargeant un flux gazeux, de telle façon que de l'huile va être transportée vers la tête de connexion S. Pour garantir une bonne étanchéité à la sortie de la cartouche et/ou pour minimiser le risque de réentraînement d'huile, on peut prévoir que le raccord RC forme un raccord mâle qui s'insère dans le tube central 8, au moins à plus d'un tiers de la longueur de l'espace intérieur creux 6, en réalisant un contact radial contre une face interne du tube central 8, par exemple au niveau du bourrelet intérieur 8b qui est par exemple adjacente au deuxième flasque 5b.

La cartouche filtrante peut, plus particulièrement épurer un flux d'air comprimé provenant de cette machine ou appareil et acheminé dans la zone amont Z1 via la ou les passages O d'entrée. Cet air comprimé traverse et ressort de la zone de lubrification du mécanisme, dont un exemple non limitatif est illustré sur la figure 6. Plus généralement, la cartouche 1 est utilisable pour toute application dans laquelle un gaz doit être épuré par séparation d'un liquide, tel que de l'huile/lubrifiant. La figure 6 montre que le gaz brut peut typiquement arriver par un côté, par un canal C4 provenant d'une machine ou équipement pouvant par exemple inclure un carter 200 de collecte d'huile et un mécanisme lubrifié par l'huile. Le canal C4 fait alors partie d'une base de support/tête de connexion S et communique avec les passages d'entrée O.
Une telle base est généralement métallique et peut constituer une tête de connexion S, fixe, tandis que la cartouche filtrante 1 est montée de façon amovible par sa face de connexion FC.

Dans le cas non limitatif de la figure 6, une cartouche filtrante 1 munie de ses deux moyens/étages de filtration 3, 4 peut équiper un compresseur à vis 100 (par exemple à deux vis 16, 18) ou machine similaire dans laquelle un flux gazeux se salit en passant dans une zone de lubrification. La cartouche filtrante 1 peut se monter sur un support ou tête de connexion S en liaison fluidique avec le circuit d'air comprimé. Un tel support /tête de connexion S est par exemple éloigné ou disposé à l'opposé d'une bride 120 de fixation pour la connexion mécanique du compresseur à vis 10 à un moteur électrique.
Ce type de machine comporte un carter 200, rempli d'huile 22 au moins du côté d'un fond de carte, dans lequel sont logés/montés les principaux composants (composants du compresseur à vis 10).

Un connecteur d'entrée 24 est prévu pour l'entrée d'air extérieur, pour permettre l'alimentation en air du compresseur à vis 10. Un filtre à air 26 (distinct de la cartouche 1) peut être disposé sur ce connecteur d'entrée 24. Typiquement, une entrée d'air 28 est prévue (ici radialement) sur le connecteur d'entrée d'air 24. Du côté de la sortie des deux vis 16, 18, il y a un tuyau de sortie d'air 34 avec une conduite montante 36. Plus largement, on comprend que la machine équipée de la cartouche 1 peut disposer d'une telle sortie d'air 34 pour évacuer de l'air chargé en huile.
Sur l'exemple illustré, un capteur de température 38 est prévu optionnellement, vers l'extrémité de la conduite ascendante 36 afin de contrôler la température de l'huile. On notera que ce type de circuit a été déjà décrit dans le document US2019/338777.

On comprend que la cartouche 1 à effet de déshuilage peut équiper la tête de connexion S se trouvant dans une zone de sortie d'air d'une telle machine. À l'état assemblé, la tête de connexion S ou support pour la cartouche 1 peut comporter le raccord RC (entièrement traversé par un canal axial, suivant la direction de l'axe Z), monté dans le passage 20s, avec le conduit CC permettant de faire ressortir le de gaz épuré. Ce raccord RC, dissocié de la tête de connexion S dans l'illustration schématique de la figure 6, peut en pratique être soudé sur la tête de connexion S. Le flux de gaz épuré peut traverser alors une conduite d'évacuation munie d'un clapet anti-retour (non représentée).
Bien entendu, par un montage d'une cartouche sur un autre type d'appareil/circuit, il est permis de réaliser une filtration différente, par exemple pour séparer un liquide non huileux transporté par le flux admis.

### Exemple d'un drainage de liquide en parallèle du passage de sortie d'air

En référence à la figure 6, le support peut intégrer un canal C5 de drainage de gouttelettes de liquide ayant pu être séparées dans l'espace intérieur creux 6. Le raccord d'insertion mâle RC, tel que visible sur la figure 1, peut par exemple inclure un passage radialement plus extérieur que le conduit central CC, pour l'écoulement liquide de cette huile. Plus largement lorsque la cartouche 1 équipe une machine pourvue d'un carter d'huile, le liquide correspondant aux gouttelettes récupérées dans l'espace intérieur creux 6 peut rejoindre le canal C5 pour le retour d'huile au carter 200 (canal descendant par exemple, pour déverser ce liquide séparé du côté fond du carter pour la collecte d'huile), optionnellement une conduite 58 de retour d'huile qui dirige cette huile vers la zone à lubrifier.
Dans certaines réalisations, comme dans le cas de la figure 5, un ou plusieurs relief(s) r8 creusé(s) localement, peuvent permettre à un écoulement liquide de s'effectuer long du raccord RC, au travers de la zone de contact avec le bourrelet 8b par exemple. Plus largement, une ou plusieurs discontinuités dans ce contact peuvent permettre un écoulement de gouttelettes d'huile vers le canal C5. La cartouche 1 présente alors une partie femelle de connexion dont la région de fixation RF s'étend de façon périphérique/ autour par rapport à cette voie d'écoulement, isolée et séparée de la zone amont Z1 par la projection 8c raccordée sur l'élément de couvercle 20.

Il doit être évident pour les personnes versées dans l'art que la présente invention permet des modes de réalisation sous de nombreuses autres formes spécifiques sans l'éloigner du domaine d'application de l'invention comme revendiqué.
Par exemple, bien que les tubes 7, 8 ont a été illustrée sous forme de cylindre, il est permis d'obtenir des géométries un peu différentes, par exemple avec une section ovale et non pas circulaire, ou en incluant des zones de méplats pour l'un et/ou l'autre des tubes 7, 8. Par ailleurs, le premier tube 7 peut éventuellement résulter d'un assemblage de deux coques ou moitiés reliées par une charnière longitudinale, par exemple une charnière venue de matière avec le reste de la première pièce 11. Eventuellement, de manière complémentaire ou alternative, le deuxième tube 8 peut éventuellement résulter d'un assemblage de deux coques ou moitiés reliées par une charnière longitudinale, par exemple une charnière venue de matière avec le reste de la deuxième pièce 12.

## Revendications

1. Cartouche (1) amovible de filtration à raccord de fixation en rotation pour se monter sur un support suivant un axe de montage rotatif, la cartouche (1) permettant de séparer une partie fluide ou de l'huile d'un flux admis et comportant :
- un élément filtrant (EF) ayant un axe central (X) et pourvu d'une ossature (15) incluant un premier flasque (5a) fermé et un deuxième flasque (5b) avec une ouverture centrale qui définissent des extrémités axiales opposées de l'élément filtrant (EF) ;
- une première pièce (11) ou élément structurel, appartenant à l'ossature (15), incluant le premier flasque (5a) et un premier tube ajouré (7) qui s'étend longitudinalement depuis le premier flasque (5a), autour de l'axe central jusqu'à une extrémité annulaire (E2) reliée rigidement au deuxième flasque (5b) ;
- un boîtier externe (2) délimitant un volume intérieur contenant l'élément filtrant (EF) qui sépare ledit volume intérieur en une zone amont (Z1) et une zone aval (Z2) ;
- un élément de couvercle (20), appartenant au boîtier, qui inclut le raccord de fixation et délimite au moins un passage (O) d'entrée communiquant avec la zone amont (Z1) où circule le flux admis et un passage (20s) de sortie d'un flux épuré communiquant avec la zone aval (Z2), le passage de sortie formé dans le raccord de fixation étant traversé par l'axe central (X) ;
- un premier étage de filtration (3) et un deuxième étage de filtration (4) qui est radialement espacé du premier étage de filtration (3) pour être plus proche d'un espace intérieur creux (6) de la zone d'aval (Z2) ;
**caractérisée en ce que** l'espace intérieur creux (6) est délimité par un deuxième tube ajouré (8) dit tube central qui est conçu et formé avec le deuxième flasque (5b) dans une deuxième pièce (12) de l'ossature, qui est distincte de la première pièce ou élément structurel, le deuxième flasque (5b) incluant une projection axiale (8c) annulaire saillante à l'opposé du deuxième tube (8), depuis l'ouverture centrale, pour former un conduit axial de sortie ;
**et en ce que** ladite ossature (15) est réalisée en seulement lesdites pièces (11, 12) formées chacune en matériau en plastique, avec le premier tube (7) qui :
- permet l'insertion, dans la première pièce (11) ou élément structurel, du tube central (8) via l'extrémité annulaire du premier tube (7) ;
- s'étend autour du tube central (8) supportant le deuxième étage de filtration (4) ; et
- supporte et permet de disposer le premier étage de filtration (3) le long d'un espace périphérique du volume intérieur qui fait partie de la zone amont (Z1).

2. Cartouche selon la revendication 1, dans laquelle la zone amont (Z1) est une zone de circulation d'un flux gazeux chargé en huile qui constitue le flux admis, la cartouche (1) permettant de séparer l'huile du flux gazeux grâce au premier étage de filtration (3) et au deuxième étage de filtration (4), de préférence en réalisant une coalescence avec récupération de gouttelettes d'huile dont tout ou partie est séparée du flux gazeux dans l'espace intérieur creux (6).

3. Cartouche selon la revendication 1 ou 2, dans laquelle la deuxième pièce (12) présente un bord annulaire (12a) constitué par une extrémité libre du tube central (8), et dans laquelle une partie radiale d'obturation (PR) prévue dans le premier flasque (5a) ferme l'espace intérieur creux (6), du côté d'un fond de la cartouche axialement opposé au conduit axial de sortie,
le bord annulaire (12a) étant encliqueté sur le premier flasque (5a) et/ou noyé dans une couche de liaison (L7') avec le premier flasque (5a), pour former une première jonction annulaire entre la première pièce (11) et la deuxième pièce (12) qui est une jonction :
- adjacente à la partie radiale d'obturation (PR) ; et
- adjacente et radialement plus intérieure qu'une zone annulaire (F2) de fixation axiale, contre le premier flasque (5a), d'un média filtrant (M2) du deuxième étage de filtration (4).

4. Cartouche selon la revendication 1, 2 ou 3, dans laquelle la première pièce (11) et la deuxième pièce (12) définissent entre elles une région intermédiaire (14) où est disposé un média filtrant (M2) porté par la deuxième pièce (12) qui est ledit média filtrant (M2) du deuxième étage de filtration (4), tandis que le premier tube ajouré (7) et le premier flasque (5a) permettent à la première pièce (11) de porter le premier média filtrant (M1) en disposant ce dernier radialement plus à l'extérieur que la région intermédiaire (14).

5. Cartouche selon la revendication 2, seule ou combinée à la revendication 3, dans laquelle la première pièce (11) et la deuxième pièce (12) définissent entre elles une région intermédiaire (14) où est disposé au moins un média filtrant (M2) qui est :
- porté par la deuxième pièce (12) ; et
- permet à des gouttelettes d'huile de coalescer en rejoignant l'espace intérieur creux (6),
sachant que le premier tube (7) est radialement espacé d'une face latérale radialement la plus externe du deuxième étage de filtration (4).

6. Cartouche selon l'une quelconque des revendications précédentes, dans laquelle l'ossature (15) est axialement en contact avec l'élément de couvercle (20), par ladite projection axiale (8c) qui forme un élément barrière entre la zone amont (Z1) et le conduit axial de sortie,
l'élément de couvercle (20) formant un connecteur de la cartouche (1) pour permettre le montage rotatif amovible.

7. Cartouche selon l'une quelconque des revendications précédentes, dans laquelle la première pièce (11) a une forme de coque réalisée en un unique matériau plastique, la première pièce (11) définissant :
- un diamètre externe (D) de l'élément filtrant (EF), par un bord annulaire externe du premier flasque (5a) ; et
- un volume (V7) interne de la coque, accessible par un débouché axial présentant un diamètre (D7) ;
le premier tube (7) ayant une longueur totale, mesurée depuis un plan du premier flasque (5a), égale à une longueur du tube central (8), de sorte que le tube central (8) est entièrement situé à l'intérieur du volume (V7).

8. Cartouche selon l'une quelconque des revendications précédentes, dans laquelle l'élément de couvercle (20) est métallique et relié, via une partie de liaison conductrice (17), au deuxième tube (8) et à l'un au moins des médias du premier étage de filtration (3) et/ou du deuxième étage de filtration (4).

9. Cartouche selon l'une quelconque des revendications précédentes, dans laquelle le tube central (8) appartenant à la deuxième pièce (12) présente une zone d'étranglement, de préférence en présentant un bourrelet annulaire (8b) radialement saillant vers l'intérieur, pour définir une section de passage minimale d'accès à l'espace intérieur creux (6), à l'opposé du deuxième flasque (5b).

10. Procédé d'assemblage d'une cartouche de filtration (1), de préférence pour une filtration huile-gaz, qui présente un boîtier (2) externe logeant un élément filtrant (EF) en incluant un raccord de fixation en rotation pour se monter de manière amovible sur un support suivant un axe de montage rotatif, le procédé comportant les étapes suivantes :
- former (50) deux tubes ajourés (7, 8) dans deux pièces distinctes dont une première pièce (11) inclut un premier tube (7) et un premier flasque (5a), fermé, qui obture un accès axial du premier tube en étant disposé perpendiculairement à un axe longitudinal du premier tube (7), et l'autre est une deuxième pièce (12) qui inclut un deuxième flasque (5b) et un deuxième tube dit tube central (8) moins large que le premier tube (7), le deuxième flasque (5b) perpendiculaire au tube central (8) ayant une ouverture centrale pour permettre l'accès axial à un espace intérieur creux (6) délimité par le tube central (8) ;
- solidariser (51a) un premier étage de filtration (3), qui présente une ou plusieurs couches enroulée(s) d'au moins un média filtrant (M1, M1'), à la première pièce (11) afin de permettre une première filtration autour du premier tube (7) ;
- solidariser (51b) un deuxième étage de filtration (4), qui présente une ou plusieurs couches enroulée(s) d'au moins un média filtrant (M2), à la deuxième pièce (12) afin de permettre une deuxième filtration autour du tube central (8) ;
- assembler (52) l'élément filtrant (EF) par interconnexion de la première pièce (11) qui supporte le premier étage de filtration (3) et de la deuxième pièce (12) qui supporte le deuxième étage de filtration (4), en insérant le tube central (8) dans le premier tube (7) qui rejoint le premier flasque (5a) dans un état final d'insertion, de sorte que l'élément filtrant (EF) a une ossature (15) constituée desdites deux pièces (11, 12), avec le deuxième étage de filtration (4) radialement espacé du premier étage de filtration (3) pour être plus éloigné d'un axe central (X) de l'élément filtrant (EF) qui est un axe de symétrie pour chacun des tubes (7, 8) ;
- insérer (52) l'élément filtrant (EF) dans un composant creux ou bol du boîtier (2) externe puis enfermer (53) l'élément filtrant dans le boîtier (2) externe, en fixant sur le composant creux un élément de couvercle (20) pourvu du raccord de fixation avec un passage de sortie de flux épuré qui communique avec l'espace intérieur creux (6), ledit élément de couvercle (20) délimitant en outre au moins un passage (O) d'entrée de flux à filtrer.

11. Procédé d'assemblage selon la revendication 10, dans lequel l'interconnexion, réalisée de préférence sans indexation en rotation, s'effectue jusqu'à une fin d'insertion du tube central (8) qui coïncide avec un appui axial du deuxième étage de filtration (4) sur une portion radiale du deuxième flasque (8) servant de support, par un même côté intérieur, d'extrémités axiales annulaires respectives du premier étage de filtration (3) et du deuxième étage de filtration (4),
et dans lequel, pour atteindre l'état final inséré de l'élément filtrant (EF), l'élément de couvercle (20) est directement engagé, par un contact axial, contre l'ossature en poussant une projection axiale (8c) de la deuxième pièce (12) qui fait saillie, à l'opposé du tube central (8), depuis la portion radiale du deuxième flasque (5b).

12. Utilisation de la cartouche filtrante (1) selon l'une quelconque des revendications 1 à 9 pour filtrer un flux d'air comprimé, dans laquelle la cartouche (1) est vissée, par le raccord de fixation, sur une tête de connexion (S) appartenant à système de lubrification d'un mécanisme, de sorte que :
- un raccord mâle (RC) s'insère dans le tube central (8) en réalisant un contact radial contre une face interne du tube central (8) ;
- l'au moins un passage (O) d'entrée reçoit de l'air comprimé ressortant d'une zone de lubrification du mécanisme.
